# FASCICULE DE BREVET EUROPEEN

(11) **EP 0 346 257 B1**
(45) Date de publication et mention de la délivrance du brevet: **25.08.1993**
(21) Numéro de dépôt: 89440054.8
(22) Date de dépôt: 08.06.1989
(51) Int. Cl.: C03B 9/30, C03B 9/03

(54) **Récipient en cristal, procédé de réalisation d'un tel récipient et dispositif pour la mise en oeuvre manuelle de ce procédé**
Kristallbehälter, Verfahren zum Herstellen dieses Behälters und Vorrichtung zur manuellen Durchführung dieses Verfahrens
Crystal containers , process for making such a container and apparatus for the manual realization of this process

(30) Priorité: 09.06.1988 FR 8808035
(43) Date de publication de la demande: 13.12.1989
(73) Titulaire: COMPAGNIE DES CRISTALLERIES DE SAINT-LOUIS, S.A., F-57620 Lemberg (FR)
(72) Inventeur: Eslinger, Jean-Marie, Saint-Louis-Les-Bitche F-57620 Lemberg (FR); Gossmann, Paul, Saint-Louis-Les-Bitche F-57620 Lemberg (FR); Cacas, Michel, Saint-Louis-Les-Bitche F-57620 Lemberg (FR)
(74) Mandataire: Nuss, Pierre

(56) Documents cités:
- DE-A- 3 316 149
- FR-A- 380 944
- US-A- 2 183 961

## Description

La présente invention concerne le domaine des récipients d'emballage de produits alimentaires, en particulier d'alcools, notamment des récipients en cristal, et a pour objet un tel récipient en cristal empêchant la migration du plomb.

L'invention a également pour objet un procédé de réalisation d'un tel récipient, ainsi qu'un dispositif pour la mise en oeuvre manuelle de ce procédé.

L'attaque des verres par les solutions aqueuses acides peut être assimilée schématiquement à un échange ionique, dans lequel certains cations du verre diffusent dans la solution en étant remplacés par des protons H⁺ (ou hydroxonium H₃0⁺) de la solution.

Les cations concernés par ces phénomènes de diffusion sont ceux qui sont le moins fortement liés à la structure siliceuse des verres, a savoir, préférentiellement, les cations modificateurs de réseaux, notamment les cations alcalins et alcalino-terreux, ainsi que certains ions intermédiaires, en particulier le plomb.

La toxicité du plomb entrant dans la composition de nombreux émaux a conduit à établir des normes de cession maximale pour les articles décorés destinés à un contact alimentaire. Le cristal, qui est une dénomination réservée à un verre contenant plus de 24 % en poids d'oxyde de plomb, doit satisfaire à ces normes.

La détermination de la cession de plomb s'effectue par remplissage des récipients avec une solution d'acide acétique à 4 %, puis par dosage, par absorption atomique, du plomb passé dans la solution acide après un contact de 24 heures à une température de 22°C. La dose de plomb autorisée varie, en fonction des législations des différents pays, entre 3 mg/l et 5 mg/l.

Un cristal supérieur, c'est-à-dire renfermant plus de 30 % de PbO, permet de satisfaire sans grande difficulté aux exigences précitées, les taux de cession mesurés étant de l'ordre de 0,2 mg/l.

Par contre, dans le cas où un tel récipient est destiné à servir d'emballage ou de contenant, ce sont les normes relatives au contenu qui doivent être satisfaites. Ainsi, dans le cas de spiritueux, tels que le Cognac, par exemple, les teneurs maximales admissibles varient entre 0 et 0,5 mg/l, quelle que soit la durée du contact. Pour les alcools, cette durée peut être de plusieurs années.

Des mesures effectuées sur des Cognac ayant séjourné dix ans dans des carafes en cristal ont permis de relever des valeurs de cession comprises entre 5 mg/l et 7,5 mg/l, ce qui interdit l'usage de telles carafes pour la commercialisation desdits Cognac dans certains pays.

Afin de minimiser les cessions de plomb, diverses méthodes ont été proposées, ces méthodes consistant toutes a effectuer un lessivage de l'intérieur des carafes, préalablement à leur remplissage définitif. A cet effet, ont été utilisés des lessivages au moyen d'acide acétique, d'acide citrique ou d'acide nitrique, ces lessivages étant suivis d'un rinçage à l'eau, éventuellement activé par utilisation d'ultra-sons.

Il a également été proposé de remplir les carafes avec un alcool de bas de gamme, puis de les stocker pendant un an avant de les vider et de les remplir avec l'alcool haut de gamme auquel lesdites carafes sont destinées, l'alcool contaminé par le plomb étant dilué avec de l'alcool neuf de façon à satisfaire aux normes.

Toutes ces solutions présentent, cependant, l'inconvénient de requérir de nombreuses manipulations, ainsi que des stockages. En outre, les solutions proposées permettent uniquement de faire diminuer les teneurs en plomb des cessions ultérieures, sans apporter de solution valable au problème fondamental de ces cessions.

On connaît, en outre, de EP-Al-0 330 792 à considérer sous les termes de l'article 54(3) de la CBE, un récipient en cristal destiné à contenir des produits alimentaires et des boissons à caractère acide, notamment des boissons alcoolisées telles que du Cognac, comportant sur sa surface interne une pellicule mince continue de verre sans plomb formant écran, en vue d'empêcher la migration du plomb du cristal vers lesdits produits et boissons.

La présente invention a pour objet un tel récipient en cristal présentant un revêtement intérieur sous la forme d'une couche d'un verre de faible épaisseur ne contenant pas de plomb, de manière à empêcher toute migration de plomb, la quantité de verre correspondant sensiblement au dixième de la quantité totale de matériaux constituant ledit récipient.

L'invention a également pour objet un procédé de réalisation de tels récipients en cristal empêchant la migration du plomb consistant essentiellement à prélever tout d'abord au bout d'une canne une quantité de verre correspondant sensiblement au dixième de la quantité totale de matériaux mise en oeuvre pour la réalisation du récipient, puis à la former dans une mailloche, et ensuite à utiliser la canne enrobée de verre pour cueillir une quantité de cristal nécessaire à la réalisation par soufflage du récipient dans un moule, le coefficient de dilatation du verre étant ajusté à celui du cristal, à savoir à moins de ± 3 X 10⁻⁷°C⁻¹, afin de réaliser une soudure du verre au cristal résistant parfaitement aux contraintes du traitement thermique et de refroidissement.

Enfin, l'invention a également pour objet un dispositif pour la mise en oeuvre manuelle de ce procédé, constitué par une mailloche à profil modifié présentant, à distance du bord de pose de l'extrémité de la canne un renflement et par une canne présentant près de son extrémité deux gorges circonférentielles écartées entre elles.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue en plan du dispositif conforme à l'invention en position d'utilisation ;
la figure 2 est une vue en coupe longitudinale d'un mors de canne, et
la figure 3 est une vue en plan d'une mailloche.

Conformément à l'invention, le récipient en cristal présente un revêtement intérieur sous la forme d'une couche d'un verre de faible épaisseur ne contenant pas de plomb, de manière à empêcher toute migration de plomb, la quantité de verre correspondant sensiblement au dixième de la quantité totale de matériaux constituant ledit récipient. Ainsi, les parois du récipient présenteront, pour une épaisseur totale de quelques millimètres, une épaisseur d'une couche de protection intérieure de quelques dixièmes de millimètres.

Selon une caractéristique préférée de l'invention, le verre utilisé est un verre de type extra-blanc très pur, dont la quantité de fer total est inférieure à 100 ppm, ou ayant subi une correction de teinte par decoloration chimique et/ou physique.

La composition du verre formant la couche de revêtement intérieur du récipient présente avantageusement la formulation en pourcentages pondéraux de matières premières suivante :

| | |
|---|---|
| sable | 54 % à 57 % |
| alumine | 2 % à 3 % |
| carbonate de sodium | 20 % à 23 % |
| nitrate de potassium | 5 % à 7 % |
| carbonate de calcium | 2 % à 4 % |
| dolomie | 7 % à 9 % |
| acide borique | 3 % à 4 % |
| oxyde de zinc | 1 % à 2 % |

Un verre d'une telle composition présente une bonne résistance chimique et permet d'améliorer la résistance hydrolytique des récipients obtenus.

L'invention a également pour objet un procédé de réalisation de tels récipients en cristal empêchant la migration du plomb consistant essentiellement à prélever tout d'abord au bout d'une canne l une quantité de verre correspondant sensiblement au dixième de la quantité totale de matériaux mise en oeuvre pour la réalisation du récipient, puis à la former dans une mailloche 2, et ensuite à utiliser la canne enrobée de verre pour cueillir une quantité de cristal nécessaire à la réalisation par soufflage du récipient dans un moule, le coefficient de dilatation du verre étant ajusté à celui du cristal, à savoir à moins de ± 3 X 10⁻⁷ °C⁻¹, afin de réaliser une soudure du verre au cristal résistant parfaitement aux contraintes du traitement thermique et de refroidissement.

Lorsque le verrier souffle dans sa canne, une bulle se forme et se développe dans la masse du verre qui, lors de sa déformation progressive, pousse le cristal l' enrobant contre les parois du moule et épouse la forme de la paroi interne du récipient en en assurant un revêtement parfait.

Par ce mode de réalisation, il est possible d'éviter tout contact du plomb renfermé dans le cristal avec le contenu du récipient, tandis que l'aspect extérieur et le brillant du cristal sont préservés.

Le verre réalisé selon la formule précitée est avantageusement élaboré avec protection contre tout risque de contamination par le plomb, à savoir, par utilisation d'un mélangeur spécial, ainsi que de conteneurs et d'outils de manutention spéciaux et d'un pot neuf pour la fusion.

Les conditions de fusion du verre sont directement dépendantes des caractéristiques mécaniques et thermiques des installations mises en oeuvre et la conduite de la fusion du verre est réalisée à une température de fusion supérieure d'environ 30°C à celle du cristal, pendant une durée plus grande que pour ce dernier, le palier d'affinage étant surveillé afin, d'une part, d'obtenir une remontée et une élimination des bulles gazeuses occluses et, d'autre part, d'éviter un phénomène de dégazage.

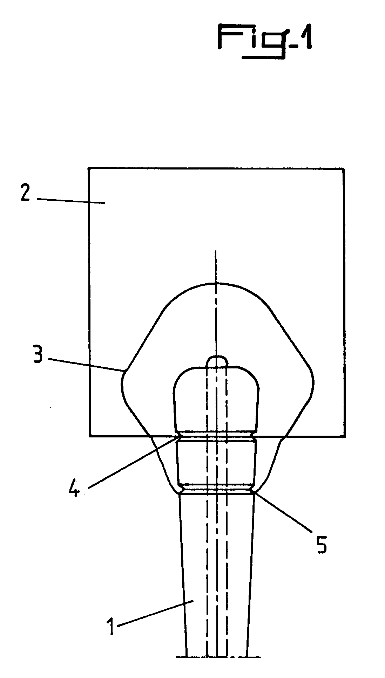

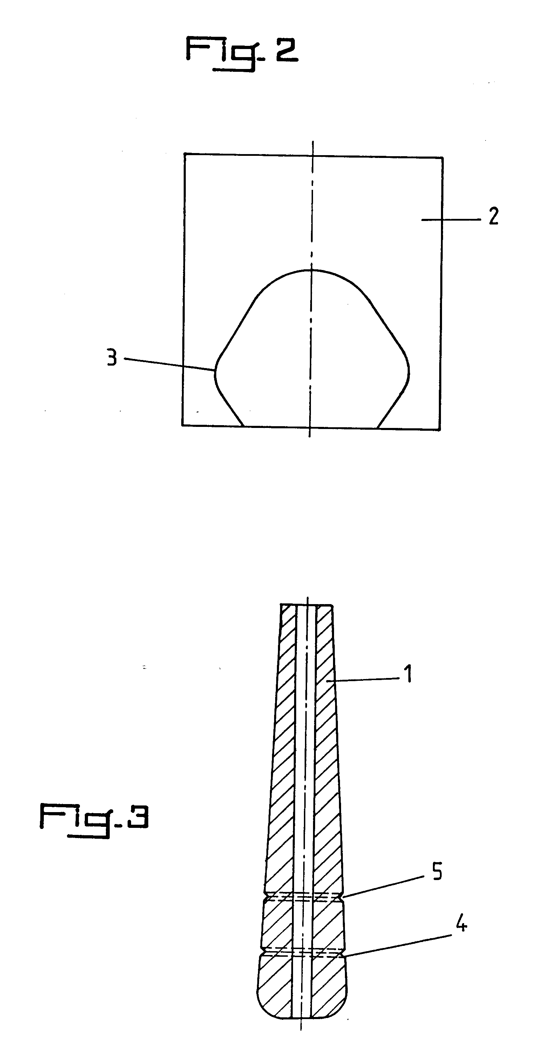

Enfin, l'invention a également pour objet un dispositif pour la mise en oeuvre du procédé décrit ci-dessus, qui est essentiellement constitué par une mailloche 2 à profil modifié présentant, à distance du bord de pose de l'extrémité de la canne un renflement 3 et par une canne 1 présentant près de son extrémité deux gorges circonférentielles 4 et 5 écartées entre elles (figures 1 à 3).

La prévision du renflement 3 dans le profil modifié de la mailloche 2 permet d'assurer un dépôt de verre d'épaisseur supérieure au niveau du col du récipient afin d'éviter que la couche protectrice de verre soit traversée par le rodage conique du bouchage et donc la mise a nu du cristal sous-jacent.

En outre, le profil spécial de la mailloche 2 sert de gabarit volumique permettant de maintenir constante la quantité de verre utilisée, en combinaison avec la rainure 4.

Les deux rainures 4 et 5 sont destinées à marquer plus particulièrement, l'une, la rainure 5, la limite d'enverrage de la canne lors du cueillage, et l'autre, la rainure 4, le positionnement par le verrier de la mailloche 2, de manière parfaitement régulière et identique d'un récipient à l'autre, tout au long de la fabrication. Ainsi, il est possible de réaliser un prelèvement régulier d'une quantité de verre durant toute la fabrication ce verre étant ensuite trempé dans un godet métallique calibré renfermant une quantité de cristal parfaitement quantifiée. Ainsi, la quantité de verre cueillie à la surface du bain en fusion étant parfaitement constante la constance de la contenance du récipient obtenu est également assurée.

Des récipients conformes à l'invention ont été soumis à des tests de vieillissement accélérés réalisés par modification des conditions d'attaque de la norme correspondante. A cet effet, ces récipients et des récipients témoins non protégés ont été remplis d'une solution d'acide acétique à 8 % à une température de 38°C. Au bout de 144 heures, les récipients témoins présentaient, à l'analyse par absorption atomique, un taux de migration du plomb dans l'acide acétique compris entre 3,5 mg/l et 4 mg/l. Ces valeurs correspondent à une durée de contact Cognac-cristal, en condition normale, de l'ordre de cinq à six ans. Aucun des récipients conformes à l'invention n'a permis de relever, dans les mêmes conditions d'analyse, de migration de plomb dans les limites de détection de l'appareillage de 0,02 mg/l.

Enfin, des récipients fabriqués conformément à l'invention peuvent subir sans problème les autres étapes usuelles de la fabrication à froid, à savoir, la taille, la gravure chimique, le bouchage, le polissage à l'acide et la dorure.

Grâce à l'invention, il est possible de réaliser des récipients en cristal dans lesquels toute migration du plomb est radicalement et définitivement supprimée, sans manipulation supplémentaire après la fabrication.

Le procédé conforme à l'invention s'applique plus particulièrement à la fabrication de carafes destinées à contenir des vins et spiritueux dont l'acidité naturelle provoque une migration de plomb supérieure aux normes admises dans les carafes en cristal existantes.

En outre les récipients obtenus conformément à l'invention permettent aux producteurs de vins et spiritueux de présenter leur production de haute qualité dans un emballage en cristal.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Récipient en cristal présentant un revêtement intérieur sous la forme d'une couche d'un verre de faible épaisseur ne contenant pas de plomb, de manière à empêcher toute migration de plomb, la quantité de verre correspondant sensiblement au dixième de la quantité totale de matériaux constituant ledit récipient.

2. Récipient en cristal, suivant la revendication 1, caractérisé en ce que le verre utilisé est de type extra-blanc très pur, dont la quantité de fer total est inférieure à 100 ppm, ou ayant subi une correction de teinte par décoloration chimique et/ou physique.

3. Récipient en cristal, suivant l'une quelconque des revendications 1 et 2, caractérisé en ce que la composition du verre formant la couche de revêtement intérieur du récipient présente avantageusement la formulation en pourcentages pondéraux de matières premières suivante :
| | |
|---|---|
| sable | 54 % à 57 % |
| alumine | 2 % à 3 % |
| carbonate de sodium | 20 % à 23 % |
| nitrate de potassium | 5 % à 7 % |
| carbonate de calcium | 2 % à 4 % |
| dolomie | 7 % à 9 % |
| acide borique | 3 % à 4 % |
| oxyde de zinc | 1 % à 2 %. |

4. Procédé de réalisation de récipients en cristal empêchant la migration du plomb suivant l'une quelconque des revendications 1 à 3, consistant essentiellement à prélever tout d'abord au bout d'une canne (1) une quantité de verre correspondant sensiblement au dixième de la quantité totale de matériaux mise en oeuvre pour la réalisation du récipient, puis à la former dans une mailloche (2), et ensuite à utiliser la canne enrobée de verre pour cueillir une quantité de cristal nécessaire à la réalisation par soufflage du récipient dans un moule, le coefficient de dilatation du verre étant ajusté a celui du cristal, à savoir à moins de ± 3 X 10⁻⁷°C⁻¹, afin de réaliser une soudure du verre au cristal résistant parfaitement aux contraintes du traitement thermique et de refroidissement.

5. Dispositif pour la mise en oeuvre manuelle du procédé de réalisation suivant la revendication 4 de récipients en cristal suivant l'une quelconque des revendications 1 à 3, essentiellement constitué par une mailloche (2) à profil modifié présentant, à distance du bord de pose de l'extrémité de la canne un renflement (3) et par une canne (1) présentant près de son extrémité deux gorges circonférentielles (4 et 5) écartées entre elles.

## Claims

1. Crystal container having an internal coating in the form of a thin layer of a glass containing no lead so as to prevent the migration of lead, the quantity of glass corresponding substantially to a tenth of the total quantity of materials constituting said container.

2. Crystal container according to claim 1, characterised in that the glass used is of the very pure extra-white type having a total quantity of iron of less than 100 ppm or which has been subjected to colour correction by chemical and/or physical bleaching.

3. Crystal container according to any one of claims 1 and 2, characterised in that the composition of the glass forming the internal coating layer of the container advantageously has the following formulation in percentages by weight of raw materials:
| | |
|---|---|
| sand | 54% to 57% |
| alumina | 2% to 3% |
| sodium carbonate | 20% to 23% |
| potassium nitrate | 5% to 7% |
| calcium carbonate | 2% to 4% |
| dolomite | 7% to 9% |
| boric acid | 3% to 4% |
| zinc oxide | 1% to 2%. |

4. Process for producing crystal containers preventing lead migration according to any one of claims 1 to 3, essentially involving firstly removing, at the end of a blowpipe (1), a quantity of glass corresponding substantially to one-tenth of the total quantity of materials used for producing the container, then shaping it in a shaping block (2) and subsequently using the glass-coated blowpipe to collect a quantity of crystal required for producing the container by blowing in a mould, the coefficient of expansion of the glass being adjusted to that of the crystal, that is to less than ± 3 X 10⁻⁷°C⁻¹ in order to produce a weld between the glass and the crystal which is perfectly capable of withstanding the stresses of heat treatment and cooling.

5. Device for manually carrying out the process according to claim 4 for the production of crystal containers according to any one of claims 1 to 3, essentially consisting of a shaping block (2) with a modified profile having a swelling (3) at a distance from the edge for positioning the end of the blowpipe and of a blowpipe (1) having two mutually spaced circumferential grooves (4 and 5) close to its end.

## Patentansprüche

1. Kristallbehälter mit einer innenliegenden Beschichtung, welche die Form einer Glasschicht geringer Dicke hat, die kein Blei enthält, so daß jegliche Wanderung von Blei verhindert ist, wobei die Glasmenge im wesentlichen ein Zehntel der Gesamtmenge an Materialien darstellt, welche den Behälter bilden.

2. Kristallbehälter nach Anspruch 1, dadurch gekennzeichnet, daß das verwendete Glas ein sehr reines extraweißes Glas ist, bei welchem die Gesamtmenge an Eisen weniger als 100 ppm beträgt, oder ein Glas ist, welches eine Farbkorrektur erfahren hat, indem es auf chemische und/oder physikalische Weise entfärbt wurde.

3. Kristallbehälter nach Anspruch 1 oder 2, dadurch gekennzeichnet, daß die Zusammensetzung des Glases, welches die Schicht der innenliegenden Beschichtung des Behälters bildet, vorzugsweise die nachstehende ZusammenSetzung, ausgedrückt in Gewichtsprozenten der nachstehenden Rohmaterialien, aufweist:
| | |
|---|---|
| Sand | 54 % - 57 % |
| Aluminiumoxid | 2 % - 3 % |
| Nacriumkarbonat | 20 % - 23 % |
| Kaliumnitrat | 5 % - 7 % |
| Kalziumkarbonat | 2 % - 4 % |
| Dolomit | 7 % - 9 % |
| Borsäure | 3 % - 4 % |
| Zinkoxid | 1 % - 2 % |

4. Verfahren zum Herstellen von Kristallbehältern nach einem der Ansprüche 1 bis 3, bei welchen ein Wandern von Blei ausgeschlossen ist, bei welchem zunächst auf das Ende eines Blasrohres (1) eine Glasmenge (1) aufgebracht wird, die im wesentlichen einem Zehntel der Gesamtmenge der Materialien entspricht, welche zum Herstellen des Behälters verwendet werden, bei dem dann diese Glasmenge in einer Form (2) geformt wird, und bei welchem dann mit dem so mit Glas umhüllten Blasrohr eine Kristallglasmenge geschöpft wird, wie sie zum Herstellen des Behälters durch Blasen in einer Form benötigt wird, wobei der Ausdehnungskoeffizient des Glases auf denjenigen des Kristallglases abgestimmt ist, nämlich auf weniger +/-3 x 10⁻⁷°C⁻¹, damit man eine Verschweißung zwischen Glas und Kristallglas erhält, welche den durch die thermische Behandlung und das Abkühlen hervorgerufenen Spannungen perfekt standhält.

5. Vorrichtung zum manuellen Durchführen des Verfahrens nach Anspruch 4 zum Herstellen von Kristallbehältern nach einem der Ansprüche 1 bis 3, die im wesentlichen eine Form (2) mit modifiziertem Profil aufweist, welche unter Anstand vom Aufsetzrand für das Ende des Blasrohres eine Aufweitung (3) aufweist, und mit einem Blasrohr (1), welches in der Nähe seines Endes zwei in Umfangsrichtung verlaufende Nuten (4 und 5) aufweist, die voneinander entfernt sind.
